# EUROPEAN PATENT SPECIFICATION

(11) **EP 3 339 267 B1**
(45) Date of publication and mention of the grant of the patent: **18.08.2021**
(21) Application number: 17200437.6
(22) Date of filing: 07.11.2017
(51) Int. Cl.: C04B 26/18, C04B 18/02, C04B 111/54, C04B 111/80

(54) **ENGINEERED STONE AND MANUFACTURING METHOD THEREOF**
KUNSTSTEIN UND HERSTELLUNGSVERFAHREN DAFÜR
PIERRE ARTIFICIELLE ET SON PROCÉDÉ DE FABRICATION

(30) Priority: 23.12.2016 KR 20160178218
(43) Date of publication of application: 27.06.2018
(73) Proprietor: Lotte Advanced Materials Co., Ltd., Jeollanam-do 59616 (KR)
(72) Inventor: LEE, Heecheol, 16073 Uiwang-si, Gyeonggi-do (KR); HWANG, Cheol-Yeon, 16073 Uiwang-si, Gyeonggi-do (KR); KIM, Kyunghwan, 16073 Uiwang-si, Gyeonggi-do (KR); BAE, Seul-Gi, 16073 Uiwang-si, Gyeonggi-do (KR); SON, Changho, 16073 Uiwang-si, Gyeonggi-do (KR); AN, Sung Jin, 16073 Uiwang-si, Gyeonggi-do (KR)
(74) Representative: Agasse, Stéphane

(56) References cited:
- EP-A1- 0 483 892
- EP-A2- 2 610 227
- CN-A- 101 818 553
- KR-A- 20130 077 142
- KR-A- 20130 077 680
- US-A1- 2014 179 847

## Description

### CROSS-REFERENCE TO RELATED APPLICATION

This application claims priority to and the benefit of Korean Patent Application No. 10-2016-0178218 filed in the Korean Intellectual Property Office on December 23, 2016.

### BACKGROUND OF THE INVENTION

### (a) Field of the Invention

An engineered stone and a manufacturing method thereof are disclosed.

### (b) Description of the Related Art

Natural stones such as granite and marble can have beautiful patterns on the surface thereof and thus have been used as building decoration material. Recently, the demand for natural stones for use in applications such as flooring, wall panels, sinks, and the like has significantly increased. However, this demand may not be met only with high cost natural stones. Accordingly, various artificial stones are also being developed and used.

The artificial stones are classified into general artificial stones manufactured by adding various mixing materials such as an inorganic filler, a colorant, a curing agent, and the like to an acryl-based or unsaturated polyester base resin and resin-based engineered stones (so called, "engineering stones") manufactured by mixing an inorganic (silica-based) natural mineral and a binder resin to obtain a compound and then, vacuuming, vibrating, compressing, and molding the compound to appear a texture of the natural stones.

The resin-based engineered stones may be manufactured to show various colors and textures depending on a kind of natural mineral, a color of a resin or pigment, a stirring process, and the like and more excellent natural textures than the general artificial stones due to a use of the natural mineral as a main material and thus have recently been in increasing demand.

These resin-base engineered stones may be manufactured to have a single color, a multicolor tone by adding pigments having different colors one another and mixing resin mixtures having various colors in a mixer, or a natural stone texture by using a chip.

As an attempt to improve a function and performance of an artificial marble, an attempt to apply luminance to the artificial marble by using a noctilucenct material such as a phosphorescent material and the like, a light emitting material such as an ultraviolet (UV) emitting as well as ultraviolet (UV) absorbing material, or the like has been made.

However, a conventional phosphorescent artificial marble may be manufactured in a method of coating a phosphorescent pigment on the surface or creating a texture by using a phosphorescent chip. When the phosphorescent chip is used, uniform phosphorescence may not be obtained, and when the phosphorescent pigment is coated on the surface, the texture on the surface may be different from that of natural marble.

In addition, the conventional phosphorescent artificial marble uses an excessive amount of the phosphorescent pigment to accomplish sufficient phosphorescence performance. However, the phosphorescent pigment is expensive and thus may increase a manufacturing cost when used in the excessive amount and resultantly, put an obstacle on commercial availability of the artificial marble. Accordingly, a request of accomplishing sufficient phosphorescence by minimizing use of the phosphorescent pigment has been made.

EP 2 610 227 A2 relates to an artificial marble that includes unsaturated polyester resin (A), compound containing silica (B), and luminescent pigment (C). It also relates to artificial marble that includes 70 to 95 % by weight of a non-luminescent base material (I) comprising unsaturated polyester resin (A), compound containing silica (B), and organic/inorganic pigment (C) and 5 to 30 % by weight of a luminescent amorphous pattern part (II) comprising unsaturated polyester resin (A), compound containing silica (B), and luminescent pigment (D). Furthermore, it relates to marble that includes unsaturated polyester resin (A), compound containing silica (B), and amorphous luminescent chip (C).

Accordingly, the present inventors have researched an appropriate mixing ratio in order to solve this problem and resultantly developed a resin-based engineered stone capable of accomplishing phosphorescence keeping sufficient luminance for a long time as well as using a minimum amount of the phosphorescent pigment.

### SUMMARY OF THE INVENTION

The present disclosure is to provide a resin-based engineered stone appearing various surface textures depending on illumination of lighting.

An engineered stone according to an embodiment of the present disclosure includes a light transmitting mother material (I) and a phosphorescent chip (II), wherein the light transmitting mother material (I) includes ≥ 7 wt% to ≤ 12 wt% of an unsaturated polyester resin (A) and ≥ 88 wt% to ≤ 93 wt% of a silica-containing compound (B) based on a total amount of the light transmitting mother material (I), the light transmitting mother material (I) further includes ≥ 0.01 part by weight to ≤ 1 part by weight of an organic/inorganic pigment (C) based on 100 parts by weight of the unsaturated polyester resin (A), the phosphorescent chip (II) includes ≥ 8 wt% to ≤ 15 wt% of an unsaturated polyester resin (A), ≥ 85 wt% to ≤ 92 wt% of a silica-containing compound (B'), and a phosphorescent pigment (D) based on a total amount of the phosphorescent chip (II), the phosphorescent pigment (D) is included in an amount of ≥ 2 parts by weight to ≤ 5 parts by weight based on 100 parts by weight of the unsaturated polyester resin (A), and the silica-containing compound (B') includes ≥ 20 wt% to ≤ 30 wt% of a silica powder (b1) based on a total amount of the phosphorescent chip (II), wherein an average particle diameter of the silica powder (b1) is greater than 0 µm and less than or equal to 45 µm, wherein the light transmitting mother material (I) is included in an amount of > 70 wt% to ≤ 95 wt% and the phosphorescent chip (II) is included in an amount of > 5 wt% to ≤ 30 wt% based on the total amount of the engineered stone.

The silica-containing compound (B) may include a silica powder (b1), a silica sand (b2), and a quartz chip (b3).

An average particle diameter of the silica powder (b1) is greater than 0 µm and less than or equal to 45 µm, an average particle diameter of the silica sand (b2) may be greater than or equal to 0.1 mm and less than 1.2 mm, and an average particle diameter of the quartz chip (b3) may be greater than or equal to 1.2 mm and less than or equal to 6.0 mm. The average particle diameter can be measured using a HELOS (a light diffraction particle size analyzer by Sympatec Ltd).

The silica powder (b1) may be included in an amount of ≥ 20 wt% to ≤ 30 wt% based on a total amount of the light transmitting mother material (I), the silica sand (b2) may be included in an amount of ≥ 35 wt% to ≤ 45 wt% based on a total amount of the light transmitting mother material (I), and the quartz chip (b3) may be included in an amount of ≥ 10 wt% to ≤ 30 wt% based on a total amount of the light transmitting mother material (I).

The silica powder (b1) may have a specific gravity of ≥ 2.50 to ≤ 2.80, more preferred ≥ 2.60 to ≤ 2.70, most preferred ≥ 2.62 to ≤ 2.67.

The silica-containing compound (B') may include the silica powder (b1) and the silica sand (b2).

An average particle diameter of the silica powder (b1) is greater than 0 µm and less than or equal to 45 µm and an average particle diameter of the silica sand (b2) may be greater than or equal to 0.1 mm and less than 1.2 mm.

The silica sand (b2) may be included in an amount of ≥ 60 wt% to ≤ 70 wt% based on a total amount of the phosphorescent chip (II).

An average particle diameter of the phosphorescent pigment (D) may be ≥ 6 µm to ≤ 150 µm. This diameter can be measured using a RODOS/M device.

The specific gravity of the phosphorescent pigment (D) may be ≥ 3.5 to ≤ 4.5, more preferred ≥ 3.8 to ≤ 4.2 and most preferred ≥ 3.9 to 4.1.

The light transmitting mother material (I) and the phosphorescent chip (II) may independently further include a curing agent, a curing accelerator, and a cross-linking agent.

The curing agent may be included in an amount of ≥ 1.0 part by weight to ≤ 3.0 parts by weight based on 100 parts by weight of the unsaturated polyester resin (A).

The curing accelerator may be included in an amount of ≥ 0.1 part by weight to ≤ 0.2 parts by weight based on 100 parts by weight of the unsaturated polyester resin (A).

The cross-linking agent may be a silane-based cross-linking agent.

The cross-linking agent may be included in an amount of ≥ 0.5 parts by weight to ≤ 2.0 parts by weight based on 100 parts by weight of the unsaturated polyester resin (A).

The engineered stone may have a diffuse transmittance of greater than or equal to 6.0 % and luminance after 1 hour of greater than or equal to 7.0 mcd/m².

The phosphorescent chip (II) may be an amorphous phosphorescent chip.

Another embodiment of the present disclosure provides a method for manufacturing an engineered stone that includes preparing a phosphorescent resin composition (ii) including ≥ 8 wt% to ≤ 15 wt% of an unsaturated polyester resin (A), ≥ 85 wt% to ≤ 92 wt% of a silica-containing compound (B'), and a phosphorescent pigment (D), wherein the phosphorescent pigment (D) is included in an amount of ≥ 2 parts by weight to ≤ 5 parts by weight based on 100 parts by weight of the unsaturated polyester resin (A), and the silica-containing compound (B') includes ≥ 20 wt% to ≤ 30 wt% of a silica powder (b1) based on a total amount of the phosphorescent resin composition (ii); wherein an average particle diameter of the silica powder (b1) is greater than 0 µm and less than or equal to 45 µm, dispersing the phosphorescent resin composition (ii) using a dispersing equipment; vacuum-vibration-compression molding the phosphorescent resin composition (ii) dispersed to have a predetermined shape and molding it into a sheet having a phosphorescence effect; crushing the sheet having the phosphorescence effect to prepare a phosphorescent chip (II); preparing a light transmitting resin composition (i) including ≥ 7 wt% to ≤ 12 wt% of an unsaturated polyester resin (A) and ≥ 88 wt% to ≤ 93 wt% of a silica-containing compound (B), and further including ≥ 0.01 part by weight to ≤ 1 part by weight of an organic/inorganic pigment (C) based on 100 parts by weight of the unsaturated polyester resin (A); mixing the light transmitting resin composition (i) with the phosphorescent chip (II) to prepare an engineered stone mixture; dispersing the engineered stone mixture using a dispersing equipment to have a predetermined shape; and vacuum-vibration-compression molding a uniformly distributed engineered stone mixture to manufacture an engineered stone, wherein the light transmitting mother material (I) is included in an amount of > 70 wt% to ≤ 95 wt% and the phosphorescent chip (II) is included in an amount of > 5 wt% to ≤ 30 wt% based on the total amount of the engineered stone.

The silica-containing compound (B) includes a silica powder (b1) having an average particle diameter of greater than 0 µm and less than or equal to 45 µm, and may include a silica sand (b2) having an average particle diameter of greater than or equal to 0.1 mm and less than 1.2 mm, and a quartz chip (b3) having an average particle diameter of greater than or equal to 1.2 mm and less than or equal to 6.0 mm, wherein the silica powder (b1) is included in an amount of ≥ 20 wt% to ≤ 30 wt% based on a total amount of the light transmitting resin composition (i), the silica sand (b2) is included in an amount of ≥ 35 wt% to ≤ 45 wt% based on a total amount of the light transmitting resin composition (i), and the quartz chip (b3) may be included in an amount of ≥ 10 wt% to ≤ 30 wt% based on a total amount of the light transmitting resin composition (i).

The silica-containing compound (B') includes a silica powder (b1) having an average particle diameter of greater than 0 µm and less than or equal to 45 µm and may include a silica sand (b2) having an average particle diameter of greater than or equal to 0.1 mm and less than 1.2 mm, wherein the silica sand (b2) may be included in an amount of 60 wt% to 70 wt% based on a total amount of the phosphorescent resin composition (ii).

The light transmitting resin composition (i) may further include ≥ 1.0 part by weight to ≤ 3.0 parts by weight of a curing agent, ≥ 0.1 part by weight to ≤ 0.2 parts by weight of a curing accelerator, and ≥ 0.5 parts by weight to ≤ 2.0 parts by weight of a silane-based cross-linking agent based on 100 parts by weight of the unsaturated polyester resin (A).

The phosphorescent resin composition (ii) may further include ≥ 1.0 part by weight to ≤ 3.0 parts by weight of a curing agent, ≥ 0.1 part by weight to ≤ 0.2 parts by weight of a curing accelerator, and ≥ 0.5 parts by weight to ≤ 2.0 parts by weight of a silane-based cross-linking agent based on 100 parts by weight of the unsaturated polyester resin (A).

The light transmitting resin composition (i) may be provided from a plurality of blenders.

The present disclosure may provide a resin-based engineered stone having excellent light transmittance and phosphorescence and variously appearing surface textures depending on illumination of lighting.

### BRIEF DESCRIPTION OF THE DRAWINGS

FIG. 1 is a photograph showing an engineered stone according to an example embodiment of the present disclosure by being lighted behind it.
FIG. 2 is a photograph showing an engineered stone according to an example embodiment of the present disclosure under low illumination.
FIG. 3 is a photograph showing an engineered stone according to an example embodiment of the present disclosure under indoor light.

### DETAILED DESCRIPTION

Hereinafter, embodiments of the present disclosure are described in detail. However, these embodiments are exemplary, and this disclosure is not limited thereto.

As used herein, when a definition is not otherwise provided, "substituted" refers to replacement of at least one hydrogen of a compound with a C1 to C30 alkyl group; a C1 to C10 alkylsilyl group; a C3 to C30 cycloalkyl group; a C6 to C30 aryl group; a C2 to C30 heteroaryl group; a C1 to C10 alkoxy group; a fluoro group, a C1 to C10 trifluoroalkyl group such as a trifluoromethyl group; or a cyano group.

As used herein, when a definition is not otherwise provided, the term "hetero" may refer to one including 1 to 3 heteroatoms selected from N, O, S, and P, and remaining carbons in a compound or a substituent.

As used herein, when a definition is not otherwise provided, the term "alkyl group" may refer to a "saturated alkyl group" without an alkene group or an alkyne group; or an "unsaturated alkyl group" including at least one of an alkene group and an alkyne group. The term "alkene group" may refer to a substituent in which at least two carbon atoms are bound with at least one carbon-carbon double bond, and the term "alkynyl group" refers to a substituent in which at least two carbon atoms are bound with at least one carbon-carbon triple bond. The alkyl group may be a branched, linear, or cyclic alkyl group.

The alkyl group may be a C1 to C20 alkyl group, specifically a C1 to C6 lower alkyl group, a C7 to C10 middle alkyl group, or a C11 to C20 higher alkyl group.

The term "aromatic group" may refer a compound including a cyclic structure where all elements have p-orbitals which form conjugation. Specific examples thereof may be aryl group and a heteroaryl group.

The term "aryl group" may refer to a monocyclic or fused ring-containing polycyclic (i.e., rings sharing adjacent pairs of carbon atoms) groups.

The "heteroaryl group" may refer to one including 1 to 3 heteroatoms selected from N, O, S, or P in aryl group, and remaining carbons. When the heteroaryl group is a fused ring, each ring may include 1 to 3 heteroatoms.

As used herein, when specific definition is not otherwise provided, (meth)acrylate refers to acrylate or methacrylate. The (meth)acrylic acid alkyl ester refers to acrylic acid alkyl ester or methacrylic acid alkyl ester, and (meth)acrylic acid ester refers to acrylic acid ester or methacrylic acid ester.

As used herein, when a definition is not otherwise provided, the "copolymerization" may refer to a block copolymerization, random copolymerization, graft copolymerization, or alternating copolymerization, and the term "copolymer" may refer to a block copolymer, a random copolymer, a graft copolymer, or an alternating copolymer.

### Engineered Stone

In an embodiment of the present disclosure, an engineered stone includes a light transmitting mother material (I) and a phosphorescent chip (II).

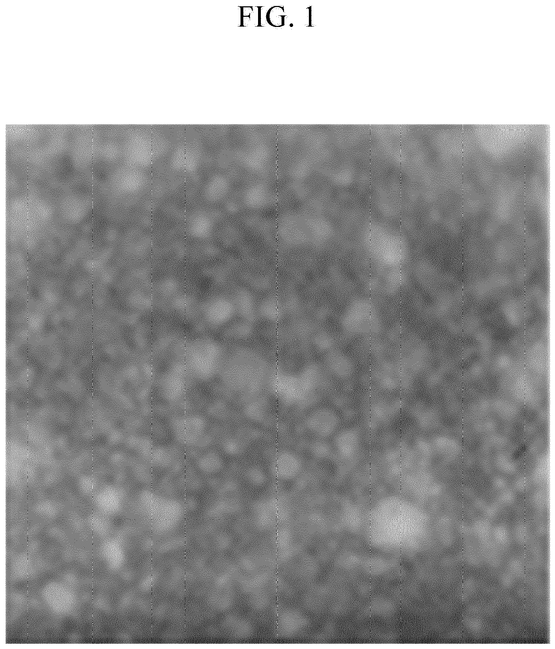

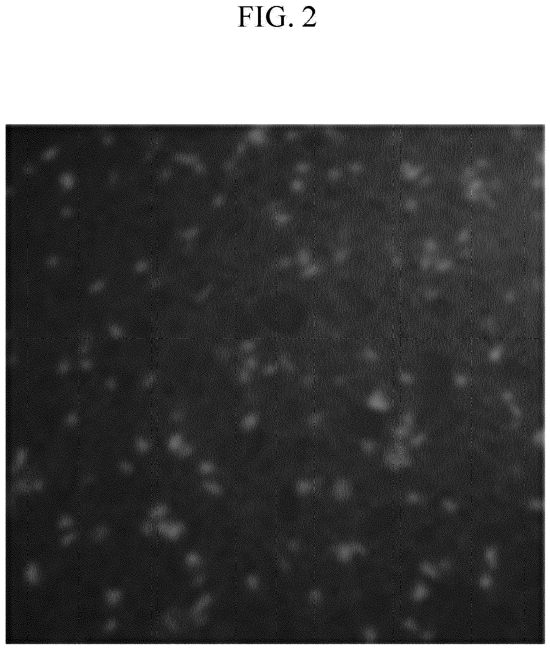

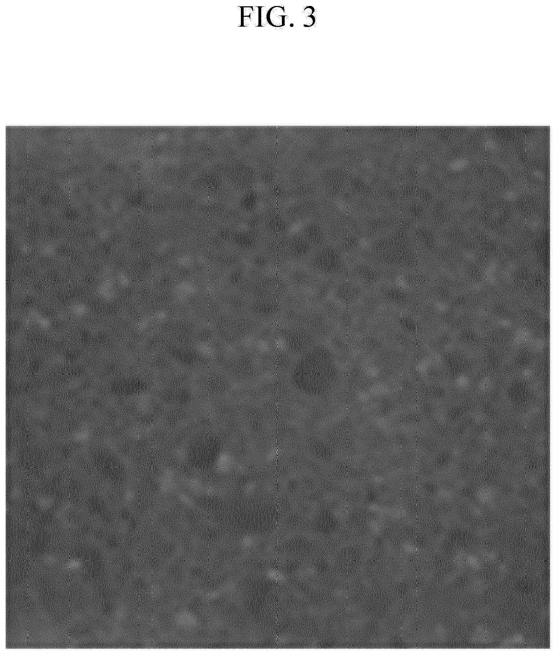

The engineered stone of the present disclosure may appear various surface textures depending on illumination of light as shown in FIGS. 1 to 3.

The light transmitting mother material (I) includes an unsaturated polyester resin (A), a silica-containing compound (B), and an organic/inorganic pigment (C) as essential constituent elements, so that the engineered stone of the present disclosure may have an appearance and a texture close to those of a natural stone.

In an embodiment of the present disclosure, the light transmitting mother material (I) includes ≥ 7 wt% to ≤ 12 wt% of an unsaturated polyester resin (A) and ≥ 88 wt% to ≤ 93 wt% of a silica-containing compound (B), and further include an organic/inorganic pigment (C).

For example, the organic/inorganic pigment (C) may be included in an amount of ≥ 0.01 part by weight to ≤ 1 part by weight based on 100 parts by weight of the unsaturated polyester resin (A).

On the other hand, the phosphorescent chip (II) includes the unsaturated polyester resin (A), a silica-containing compound (B'), and a phosphorescent pigment (D) to apply a partial phosphorescence effect to the engineered stone. In other words, the phosphorescent chip (II) has common or very similar components with the light transmitting mother material (I) except for using the phosphorescent pigment (D) instead of the organic/inorganic pigment (C) as a pigment component.

In an embodiment of the present disclosure, the phosphorescent chip (II) includes ≥ 8 wt% to ≤ 15 wt% of an unsaturated polyester resin (A), ≥ 85 wt% to ≤ 92 wt% of a silica-containing compound (B'), and a phosphorescent pigment (D).

The phosphorescent pigment (D) may be included in an amount of ≥ 2 parts by weight to ≤ 5 parts by weight based on 100 parts by weight of the unsaturated polyester resin (A).

The phosphorescent chip (II) may be an amorphous phosphorescent chip.

A partial phosphorescent pattern of the engineered stone according to the present disclosure may be variously formed by controlling the amounts of the light transmitting mother material (I) and the phosphorescent chip (II).

The engineered stone includes ≥ 70 wt% to ≤ 95 wt% of the light transmitting mother material (I) and ≥ 5 wt% to ≤ 30 wt% of the phosphorescent chip (II), for example 80 wt% to ≤ 90 wt% of a light transmitting mother material (I) and ≥ 10 wt% to ≤ 20 wt% of the phosphorescent chip (II). When the phosphorescent chip (II) is included in an amount of less than 5 wt%, the phosphorescent pattern may not be appropriately formed, but when the phosphorescent chip (II) is included in an amount of greater than 30 wt%, a texture of a natural stone may not be realized.

When the light transmitting mother material (I) and the phosphorescent chip (II) are mixed in the above ratio, the phosphorescent pattern may take ≥ 5 wt% to ≤ 30 wt% of the surface area of the engineered stone, for example, ≥ 10 wt% to ≤ 20 wt% of the surface area of the engineered stone and thus form a natural texture.

The engineered stone of the present disclosure may have diffusion transmittance of greater than or equal to 6.0 % and one hour later, maintain luminance of greater than or equal to 7.0 mcd/m².

Hereinafter, each component of the engineered stone according to the present disclosure is specifically examined.

### (A) Unsaturated Polyester Resin

In the present disclosure, a resin component surrounds a natural stone particle and a mineral filler forming a frame of the engineered stone, plays a role of bonding the whole along with a cross-linking agent, and applies elastic or tensile strength to the engineered stone.

The present disclosure uses an unsaturated polyester resin (UPE resin) having an excellent bonding force with the natural stone particle and the like as the resin component.

The unsaturated polyester resin used in the present disclosure is well known in this art, may be an esterification product of a polybasic acid and a polyvalent alcohol, wherein the polybasic acid and/or the polyvalent alcohol compound includes an unsaturated moiety.

Polycarboxylic acid, polycarboxylic anhydride, polycarboxylic acid halide, or polycarboxylate ester may be used as the polybasic acid. Specific examples of the unsaturated polycarboxylic acid may be maleic acid, maleic anhydride, fumaric acid, chloromaleic acid, ethylmaleic acid, itaconic acid, citraconic acid, zeronic acid, mesaconic acid, acornic acid, ethylene dicarboxylic acid, or a mixture thereof, and the like. In addition, phthalic acid, isophthalic acid, terephthalic acid, succinic acid, or a mixture thereof which are normally used in the preparation of the polyester resin may be used.

Divalent alcohols such as ethylene glycol, diethylene glycol, propylene glycol, dipropylene glycol, 1,3-butanediol, 1,6-hexanediol, neopentyl glycol, and 1,4-cyclohexanediol; trivalent alcohols such as glycerin; tetravalent alcohol such as pentaerythritol; and the like and combinations thereof may be used as the polyhydric alcohols. Other examples of unsaturated polyhydric alcohols include without limitation butene diol, pentene diol, allyl or vinyl glycerol ether, allyl or vinyl pentaerythritol, or a mixture thereof.

The unsaturated polyester resin may have a molecular weight ranging from ≥ 70,000 g/mol to ≤ 100,000 g/mol. Since the larger molecular weight the unsaturated polyester resin has, the more excellent bonding force with the natural stone particle it has, the unsaturated polyester resin may effectively fix the natural stone particle exposed outside, even though a part of the resin is polished off during a polishing process. When the unsaturated polyester resin has a molecular weight of less than 70,000 g/mol, the natural stone particle may be dropped off from the surface of the engineered stone, but when the unsaturated polyester resin has a molecular weight of greater than 10,000 g/mol, the unsaturated polyester resin has too large viscosity and thus may not be well mixed with the natural stone particle.

In the present disclosure, as for the light transmitting mother material (I), the unsaturated polyester resin (A) is included in an amount of ≥ 7 wt% to ≤ 12 wt% based on 100 wt% of the light transmitting mother material (I) including the unsaturated polyester resin (A) and the silica-containing compound (B) and as for the phosphorescent chip (II), in an amount of ≥ 8 wt% to ≤ 15 wt% based on 100 wt% of the phosphorescent chip (II) including the unsaturated polyester resin (A), the silica-containing compound (B'), and the phosphorescent pigment (D). When the unsaturated polyester resin is included in an amount of less than 7 wt% based on 100 wt% of the light transmitting mother material (I) or in an amount of less than 8 wt% based on 100 wt% of the phosphorescent chip (II), the bonding force with the natural stone particle may be deteriorated, but when the unsaturated polyester resin is included in an amount of greater than 12 wt% based on 100 wt% of light transmitting mother material (I) or in an amount of greater than 15 wt% based on 100 wt% of the phosphorescent chip (II), an appearance and a texture of a natural stone may be lost.

### (B, B') Silica-containing Compound

In the present disclosure, as for the light transmitting mother material (I), the silica-containing compound is included in an amount of ≥ 88 wt% to ≤ 93 wt% based on 100 wt% of the light transmitting mother material (I) including the unsaturated polyester resin (A) and the silica-containing compound (B) and as for the phosphorescent chip (II), in an amount of ≥ 85 wt% to ≤ 92 wt% based on 100 wt% of the phosphorescent chip (II) including the unsaturated polyester resin (A), the silica-containing compound (B'), and the phosphorescent pigment (D). When the silica-containing compound (B, B') is included in a large amount like the range, an appearance and a texture near to those of a natural stone may be obtained.

The silica-containing compound (B) may include a silica powder (b1), a silica sand (b2), and a quartz chip (b3).

An average particle diameter of the silica powder (b1) is greater than 0 µm and less than or equal to 45 µm, an average particle diameter of the silica sand (b2) may be greater than or equal to 0.1 mm and less than 1.2 mm, and an average particle diameter of the quartz chip (b3) may be greater than or equal to 1.2 mm and less than or equal to 6.0 mm.

The silica powder (b1) may be included in an amount of ≥ 20 wt% to ≤ 30 wt% based on a total amount of the light transmitting mother material (I), the silica sand (b2) may be included in an amount of ≥ 35 wt% to ≤ 45 wt% based on a total amount of the light transmitting mother material (I), and the quartz chip (b3) may be included in an amount of ≥ 10 wt% to ≤ 30 wt% based on a total amount of the light transmitting mother material (I). The ranges of the silica powder (b1), the silica sand (b2), and the quartz chip (b3) may be appropriate in terms of a phosphorescence effect and a cost.

Particularly, when the silica sand (b2) is included in an amount of ≥ 35 wt% to 45 wt% based on a total amount of the light transmitting mother material (I), and simultaneously, the quartz chip (b3) is included in an amount of ≥ 10 wt% to ≤ 30 wt% based on a total amount of the light transmitting mother material (I), an excellent texture of a natural stone may not be obtained, but diffusion transmittance may be much improved, and thus various surface textures depending on illumination of light may be realized.

The silica-containing compound (B') includes a silica powder (b1) and may include a silica sand (b2).

The silica powder (b1) and the silica sand (b2) are the same as described above.

The silica powder (b1) is included in an amount of ≥ 20 wt% to ≤ 30 wt% based on a total amount of the phosphorescent chip (II) and the silica sand (b2) may be included in an amount of ≥ 60 wt% to ≤ 70 wt% based on a total amount of the phosphorescent chip (II). Particularly, when the silica sand is included in an amount of ≥ 60 wt% to 70 wt% based on a total amount of the phosphorescent chip (II), diffusion transmittance may be much improved, and thus various surface textures depending on illumination of light may be obtained.

### (C) Organic/inorganic Pigment

In the present disclosure, an organic/inorganic pigment may be further included to diversify a phosphorescent color. The organic/inorganic pigment may be azo-based or phthalocyanine-based and is used in an amount of ≥ 0.01 parts by weight to 1 part by weight based on 100 parts by weight of the unsaturated polyester resin (A).

### (D) Phosphorescent Pigment

Any general phosphorescent pigment applying phosphorescence to the engineered stone of the present disclosure may be used without any particular limit, but a strontium aluminate-based pigment or a zinc sulfide-based pigment may be used.

The phosphorescent pigment may have an average particle diameter ranging from ≥ 6 µm to ≤ 150 µm. When the phosphorescent pigment has an average particle diameter of less than 6 µm, light emitting performance may be deteriorated, but when the phosphorescent pigment has an average particle diameter of greater than 150 µm, a photo-radiation time for its initial saturation state may be longer.

On the other hand, the phosphorescent pigment is expensive and thus should be used at a minimum ratio to maximize light emitting performance of the engineered stone and in the present disclosure, used in an amount of ≥ 2 parts by weight to 5 wt% based on 100 parts by weight of the unsaturated polyester resin (A). When the phosphorescent pigment is used in an amount of less than 2 parts by weight according to the mixing ratio of the present disclosure, a sufficient phosphorescence effect may not be obtained, but when the phosphorescent pigment is used in an amount of greater than 5 parts by weight, use of the phosphorescent pigment may neither be economical nor expected to improve phosphorescence performance.

### (E) Other Additives

In the present disclosure, a curing agent (e1) may be used in order to cure an engineered stone and a curing accelerator (e2) may be used in order to enhance a curing reaction. The curing agent may independently be in amount of ≥ 1.0 part by weight to ≤ 3.0 parts by weight based on 100 parts by weight of the polyester resin (A) and the curing accelerator may independently be in amount of ≥ 0.1 part by weight to ≤ 0.2 parts by weight based on 100 parts by weight of the polyester resin (A).

In addition, a cross-linking agent (e3) can be used to bond the unsaturated polyester resin of the present disclosure with the natural stone particle. The cross-linking agent may be a silane-based cross-linking agent and may independently be used in an amount of ≥ 0.5 parts by weight to ≤ 2.0 parts by weight based on 100 parts by weight of the polyester resin (A).

### Method of Manufacturing Engineered Stone

The engineered stone of the present comprises the the light transmitting mother material (I) and the phosphorescent chip (II).

### Preparation of Phosphorescent Chip (II)

The preparation of the phosphorescent chip includes preparing a phosphorescent resin composition (ii), dispersing the phosphorescent resin composition (ii) using a dispersing equipment, vacuum-vibration-compression molding the phosphorescent resin composition (ii) dispersed to have a predetermined shape and molding it into a sheet having a phosphorescence effect, and crushing the sheet having the phosphorescence effect to prepare a phosphorescent chip.

The sheet may be crushed to have a size of ≥ 4.0 mm to ≤ 10.0 mm.

In the preparation of the phosphorescent resin composition (ii), ≥ 8 wt% to ≤ 15 wt% of an unsaturated polyester resin (A), ≥ 85 wt% to ≤ 92 wt% of a silica-containing compound (B'), and a phosphorescent pigment (D) are mixed, wherein the phosphorescent pigment (D) is included in an amount of ≥ 2 parts by weight to ≤ 5 parts by weight based on 100 parts by weight of the unsaturated polyester resin (A), the silica-containing compound (B') includes a silica powder (b1) and the silica powder (b1) is included in an amount of ≥ 20 wt% to ≤ 30 wt% based on a total amount of the phosphorescent resin composition (ii).

In addition, the preparation of the phosphorescent resin composition (ii) may further include ≥ 1.0 part by weight to ≤ 3.0 parts by weight of a curing agent, ≥ 0.1 part by weight to ≤ 0.2 parts by weight of a curing accelerator, and ≥ 0.5 parts by weight to ≤ 2.0 parts by weight of a silane-based cross-linking agent based on 100 parts by weight of the unsaturated polyester resin (A).

### Preparation of Light Transmitting Resin Composition (i)

The light transmitting resin composition (i) forming a part of the light transmitting mother material (I) is prepared by mixing the unsaturated polyester resin (A), the silica-containing compound (B), and the organic/inorganic pigment (C) with a mixer.

The light transmitting resin composition (i) includes ≥ 7 wt% to ≤ 12 wt% of the unsaturated polyester resin (A) and ≥ 88 wt% to ≤ 93 wt% of the silica-containing compound (B) and further includes ≥ 0.01 part by weight to 1 part by weight of organic/inorganic pigment (C) based on 100 parts by weight of the unsaturated polyester resin (A).

The silica-containing compound (B) may include a silica powder (b1) having an average particle diameter of greater than 0 µm and less than or equal to 45 µm, a silica sand (b2) having an average particle diameter of greater than or equal to 0.1 mm and less than 1.2 mm, and a quartz chip (b3) having an average particle diameter of greater than or equal to 1.2 mm and less than or equal to 6.0 mm.

The silica powder (b1) may be included in an amount of ≥ 20 wt% to ≤ 30 wt% based on a total amount of the light transmitting resin composition (i), the silica sand (b2) may be included in an amount of ≥ 35 wt% to ≤ 45 wt% based on a total amount of the light transmitting resin composition (i), and the quartz chip (b3) may be included in an amount of ≥ 10 wt% to ≤ 30 wt% based on a total amount of the light transmitting resin composition (i).

The silica-containing compound (B') includes a silica powder (b1) having an average particle diameter of greater than 0 µm and less than or equal to 45 µm and may include a silica sand (b2) having an average particle diameter of greater than or equal to 0.1 mm and less than 1.2 mm.

The silica powder (b1) is included in an amount of ≥ 20 wt% to ≤ 30 wt% based on a total amount of the phosphorescent resin composition (ii) and the silica sand (b2) may be included in an amount of ≥ 60 wt% to 70 wt% based on a total amount of the phosphorescent resin composition (ii).

In addition, the light transmitting resin composition (i) may further include ≥ 1.0 part by weight to ≤ 3.0 parts by weight of a curing agent, ≥ 0.1 part by weight to about ≤ 0.2 parts by weight of a curing accelerator, and ≥ 0.5 parts by weight to ≤ 2.0 parts by weight of a silane-based cross-linking agent based on 100 parts by weight of the unsaturated polyester resin (A).

### Mixing Light Transmitting Resin Composition (i) and Phosphorescent Chip

The engineered stone may be manufactured by preparing the light transmitting resin composition (i), mixing the light transmitting resin composition (i) with the phosphorescent chip (II) to prepare an engineered stone mixture, dispersing the engineered stone mixture with a dispersing equipment into a predetermined shape, and then, vacuuming, vibrating, compressing, and molding the uniformly dispersed engineered stone mixture.

When the light transmitting resin composition (i) and the phosphorescent chip (II) are prepared, ≥ 70 wt% to ≤ 95 wt% of the light transmitting resin composition (i) and ≥ 5 wt% to ≤ 30 wt% of the phosphorescent chip (II) are mixed to prepare the engineered stone mixture.

When the engineered stone mixture is prepared, the light transmitting resin composition (i) may be divisively supplied from a plurality of mixer to control a supply speed.

The prepared engineered stone mixture is supplied in a sheet shape into a load plate, vacuum-vibration-compression-molded, and then, cured and cooled down into a slab as a half finished product, and the slab is processed into the engineered stone.

Hereinafter, the present disclosure is illustrated in more detail with reference to examples and comparative examples. However, the following examples and comparative examples are provided for the purpose of descriptions and the present disclosure is not limited thereto.

### Example

### Preparation of Samples

### (A) Unsaturated Polyester (UPE) Resin

A M900 unsaturated polyester (UPE) resin made by Aekyung Chemical Co., Ltd. was used.
(B, B') Silica-containing Compound

### (b1) Silica Powder

Silica powder having an average particle diameter of greater than 0 µm and 45 µm and made by 21^{st} Century Silica Ltd.

### (b2) Silica Sand

Silica sand having an average particle diameter of greater than or equal to 0.1 mm and less than 1.2 mm and made by Microman (Turkey).

### (b3) Quartz Chip

A quartz chip having an average particle diameter of greater than or equal to 1.2 mm and less than or equal to 6.0 mm and made by 21^{st} Century Silica Ltd. was used

### (C) Organic/inorganic Pigment

TR92, 318M, Y8G, Y6R, and R110 pigments made by Wooshin Pigment Co., Ltd. were used.

### (D) Phosphorescent Pigment

A PL-120 phosphorescent pigment having an average particle diameter of 25 µm and made by Sachiro was used.

### (E) Other additives

(e1) TBPB (Luperox P, Seiki Arkema Co., Ltd.) as a curing agent was used.
(e2) 6 %-Cobalt made by Jinyang Chemical was used as a curing accelerator.
(e3) A WD70 silane-based coupling agent made by Gudam was used as a cross-linking agent.

### Property Evaluation Method

(1) Diffusion transmittance: measured with NDH-5000 in a ASTM D 1003 measurement method to evaluate a light transmittance effect.
(2) Phosphorescence luminance: measured according to KS A 3505 at 5 minutes, 10 minutes, 20 minutes, and 60 minutes after radiating light of 200 lux for 20 minutes with DN65 of a commercial light source into a sample having an area of 201.6cm² from a distance of 0.25 m to evaluate a phosphorescent chip effect.

### Examples and Comparative Examples

The components were added as shown in Table 1 to prepare each light transmitting resin composition (i) and also, as shown in Table 2 to prepare each phosphorescent resin composition (ii), and each phosphorescent chip (II) was prepared from the phosphorescent resin composition (ii).

Specifically, the phosphorescent chips (II) were respectively added to the light transmitting resin composition (i) and dispersed therein and then, vacuum-vibration-compression molded to manufacture engineered stones, and properties of the engineered stones were measured. The results are shown in Table 3.

**(Table 1)**

| | | Exampl es 1 and 2 | Compa rative Exampl e 1 | Compa rative Exampl e 2 | Compa rative Exampl e 3 | Compa rative Exampl e 4 |
|---|---|---|---|---|---|---|
| (A) unsaturated polyester (UPE) resin (wt%) | | 7.9 | 13.00 | 13.00 | 7.9 | 6.0 |
| (B) silica-containing compound (wt%) | (b1) silica powder | 23.7 | 25.5 | 25.8 | 23.7 | 25.6 |
| | (b2) silica sand | 40.6 | 37.0 | 52.1 | 40.6 | 40.6 |
| | (b3) quartz chip | 27.8 | 24.5 | 9.1 | 27.8 | 27.8 |
| (C) organic/inorganic pigment (parts by weight relative to 100 parts by weight of the UPE resin) | | 0.01 | 0.01 | 0.01 | 0.15 | 0.01 |
| (E) other additive (parts by weight relative to 100 parts by weight of the UPE resin) | (e1) curing agent | 2.0 | 2.0 | 2.0 | 2.0 | 2.0 |
| | (e2) curing accelerator | 0.1 | 0.1 | 0.1 | 0.1 | 0.1 |
| | (e3) cross-linking agent | 1.0 | 1.0 | 1.0 | 1.0 | 1.0 |

**(Table 2)**

| | | Example 1 | Example 2 | Comparative Example 1 | Comparative Example 2 | Comparative Example 3 | Comparative Example 4 |
|---|---|---|---|---|---|---|---|
| (A) unsaturated polyester (UPE) resin (wt%) | | 10.0 | 12.0 | 7.0 | 10.0 | 10.0 | 10.0 |
| (B') silica-containing compound (wt%) | (b1) silica powder | 25.0 | 28.0 | 28.0 | 35.0 | 22.0 | 35.0 |
| | (b2) silica sand | 65.0 | 60.0 | 63.0 | 53.0 | 67.0 | 53.0 |
| (D) phosphorescent pigment (parts by weight relative to 100 parts by weight of the UPE resin) | | 2.0 | 2.0 | 2.0 | 2.0 | 1.0 | 2.0 |
| (E) other additive (parts by weight relative to 100 parts by weight of the UPE resin) | (e1) curing agent | 2.0 | 2.0 | 2.0 | 2.0 | 2.0 | 2.0 |
| | (e2) curing accelerator | 0.1 | 0.1 | 0.1 | 0.1 | 0.1 | 0.1 |
| | (e3) cross-linking agent | 1.0 | 1.0 | 1.0 | 1.0 | 1.0 | 1.0 |

**(Table 3)**

| | Example 1 | Example 2 | Comparative Example 1 | Comparative Example 2 | Comparative Example 3 | Comparative Example 4 |
|---|---|---|---|---|---|---|
| Diffuse transmittance | 7.29 | 6.7 | 5.51 | 4.17 | 1.05 | 0.8 |
| Luminance/ 1 hour | 10 | 8 | 4 | 3 | 2 | 2 |

Referring to Tables 1 to 3 and FIGS. 1 to 3, the engineered stones according to Examples 1 and 2 showed excellent diffusion transmittance and luminance compared with the engineered stones according to Comparative Examples 1 to 4 and thus turned out to realize various product patterns depending on illumination of light.

While this disclosure has been described in connection with what is presently considered to be practical example embodiments, it is to be understood that the invention is not limited to the disclosed embodiments, but, on the contrary, is intended to cover various modifications included within the scope of the appended claims. Therefore, the aforementioned embodiments should be understood to be exemplary but not limiting the present disclosure in any way.

## Claims

1. An engineered stone, comprising
a light transmitting mother material (I) and a phosphorescent chip (II),
wherein the light transmitting mother material (I) includes ≥ 7 wt% to ≤ 12 wt% of an unsaturated polyester resin (A) and ≥ 88 wt% to ≤ 93 wt% of a silica-containing compound (B) based on a total amount of the light transmitting mother material (I),
the light transmitting mother material (I) further includes ≥ 0.01 part by weight to ≤ 1 part by weight of an organic/inorganic pigment (C) based on 100 parts by weight of the unsaturated polyester resin (A),
the phosphorescent chip (II) includes ≥ 8 wt% to ≤ 15 wt% of an unsaturated polyester resin (A), ≥ 85 wt% to ≤ 92 wt% of a silica-containing compound (B'), and a phosphorescent pigment (D) based on a total amount of the phosphorescent chip (II),
the phosphorescent pigment (D) is included in an amount of ≥ 2 parts by weight to ≤ 5 parts by weight based on 100 parts by weight of the unsaturated polyester resin (A), and
the silica-containing compound (B') includes ≥ 20 wt% to ≤ 30 wt% of a silica powder (b1) based on a total amount of the phosphorescent chip (II), wherein an average particle diameter of the silica powder (b1) is greater than 0 µm and less than or equal to 45 µm, wherein
the light transmitting mother material (I) is included in an amount of ≥ 70 wt% to ≤ 95 wt% and the phosphorescent chip (II) is included in an amount of ≥ 5 wt% to ≤ 30 wt% based on the total amount of the engineered stone.

2. The engineered stone of claim 1, wherein the silica-containing compound (B) includes a silica powder (b1), a silica sand (b2), and a quartz chip (b3), wherein an average particle diameter of the silica powder (b1) is greater than 0 µm and less than or equal to 45 µm, an average particle diameter of the silica sand (b2) is greater than or equal to 0.1 mm and less than 1.2 mm, and an average particle diameter of the quartz chip (b3) is greater than or equal to 1.2 mm and less than or equal to 6.0 mm.

3. The engineered stone of any of the claims 1 to 2, wherein the silica powder (b1) is included in an amount of ≥ 20 wt% to ≤ 30 wt% based on a total amount of the light transmitting mother material (I),
the silica sand (b2) is included in an amount of ≥ 35 wt% to ≤ 45 wt% based on a total amount of the light transmitting mother material (I), and
the quartz chip (b3) is included in an amount of ≥ 10 wt% to ≤ 30 wt% based on a total amount of the light transmitting mother material (I), wherein an average particle diameter of the silica powder (b1) is greater than 0 µm and less than or equal to 45 µm, an average particle diameter of the silica sand (b2) is greater than or equal to 0.1 mm and less than 1.2 mm, and an average particle diameter of the quartz chip (b3) is greater than or equal to 1.2 mm and less than or equal to 6.0 mm.

4. The engineered stone of any of the claims 1 to 3, wherein the silica-containing compound (B') further includes silica sand (b2), wherein an average particle diameter of the silica sand (b2) is greater than or equal to 0.1 mm and less than 1.2 mm.

5. The engineered stone of any of the claims 1 to 4, wherein the silica sand (b2) is included in an amount of ≥ 60 wt% to ≤ 70 wt% based on a total amount of the phosphorescent chip (II), wherein an average particle diameter of the silica sand (b2) is greater than or equal to 0.1 mm and less than 1.2 mm.

6. The engineered stone of any of the claims 1 to 5, wherein the light transmitting mother material (I) and the phosphorescent chip (II) further independently include a curing agent, a curing accelerator, and a cross-linking agent.

7. The engineered stone of any of the claims 1 to 6, wherein the cross-linking agent is a silane-based cross-linking agent.

8. The engineered stone of any of the claims 1 to 7, wherein the engineered stone has a diffuse transmittance of greater than or equal to 6.0% and maintains luminance of greater than or equal to 7.0 mcd/m² after one hour.

9. The engineered stone of any of the claims 1 to 8, wherein the phosphorescent chip (II) is an amorphous phosphorescent chip.

10. A method for manufacturing an engineered stone, comprising
preparing a phosphorescent resin composition (ii) including ≥ 8 wt% to ≤ 15 wt% of an unsaturated polyester resin (A), ≥ 85 wt% to ≤ 92 wt% of a silica-containing compound (B'), and a phosphorescent pigment (D), wherein the phosphorescent pigment (D) is included in an amount of ≥ 2 parts by weight to ≤ 5 parts by weight based on 100 parts by weight of the unsaturated polyester resin (A), and the silica-containing compound (B') includes ≥ 20 wt% to ≤ 30 wt% of a silica powder (b1) based on a total amount of the phosphorescent resin composition (ii), wherein an average particle diameter of the silica powder (b1) is greater than 0 µm and less than or equal to 45 µm;
dispersing the phosphorescent resin composition (ii) using a dispersing equipment;
vacuum-vibration-compression molding the phosphorescent resin composition (ii) dispersed to have a predetermined shape and molding it into a sheet having a phosphorescence effect;
crushing the sheet having the phosphorescence effect to prepare a phosphorescent chip (II);
preparing a light transmitting resin composition (i) including ≥ 7 wt% to ≤ 12 wt% of an unsaturated polyester resin (A) and ≥ 88 wt% to ≤ 93 wt% of a silica-containing compound (B), and further including ≥ 0.01 part by weight to ≤ 1 part by weight of an organic/inorganic pigment (C) based on 100 parts by weight of the unsaturated polyester resin (A);
mixing the light transmitting resin composition (i) with the phosphorescent chip (II) to prepare an engineered stone mixture;
dispersing the engineered stone mixture using a dispersing equipment to have a predetermined shape; and
vacuum-vibration-compression molding a uniformly distributed engineered stone mixture to manufacture an engineered stone, wherein
the light transmitting resin composition (i) is included in an amount of ≥ 70 wt% to ≤ 95 wt% and the phosphorescent chip (II) is included in an amount of ≥ 5 wt% to ≤ 30 wt% based on the total amount of the engineered stone.

11. The method of claim 10, wherein the silica-containing compound (B) includes a silica powder (b1) having an average particle diameter of greater than 0 µm and less than or equal to 45 µm, a silica sand (b2) having an average particle diameter of greater than or equal to 0.1 mm and less than 1.2 mm, and a quartz chip (b3) having an average particle diameter of greater than or equal to 1.2 mm and less than or equal to 6.0 mm, and
the silica powder (b1) is included in an amount of ≥ 20 wt% to ≤ 30 wt% based on a total amount of the light transmitting resin composition (i), the silica sand (b2) is included in an amount of ≥ 35 wt% to ≤ 45 wt% based on a total amount of the light transmitting resin composition (i), and the quartz chip (b3) included in an amount of ≥ 10 wt% to ≤ 30 wt% based on a total amount of the light transmitting resin composition (i).

12. The method of claim 10 or 11, wherein the silica-containing compound (B') further includes a silica sand (b2) having an average particle diameter of greater than or equal to 0.1 mm and less than 1.2 mm, and
the silica sand (b2) is included in an amount of ≥ 60 wt% to ≤ 70 wt% based on a total amount of the phosphorescent resin composition (ii).

## Patentansprüche

1. Kunststein, umfassend
ein lichtdurchlässiges Grundmaterial (I) und einen phosphoreszierenden Splitter (II),
wobei das lichtdurchlässige Grundmaterial (I) auf eine Gesamtmenge des lichtdurchlässigen Grundmaterials (I) bezogen ≥ 7 Gew.-% bis ≤ 12 Gew.-% eines ungesättigten Polyesterharzes (A) und ≥ 88 Gew.-% bis ≤ 93 Gew.-% einer siliziumdioxidhaltigen Verbindung (B) enthält,
das lichtdurchlässige Grundmaterial (I) auf 100 Gewichtsteile des ungesättigten Polyesterharzes (A) bezogen weiter ≥ 0,01 Gewichtsteile bis ≤ 1 Gewichtsteil eines organischen/anorganischen Pigments (C) enthält,
der phosphoreszierende Splitter (II) auf eine Gesamtmenge des phosphoreszierenden Splitters (II) bezogen ≥ 8 Gew.-% bis ≤ 15 Gew.-% eines ungesättigten Polyesterharzes (A), ≥ 85 Gew.-% bis ≤ 92 Gew.-% einer siliziumdioxidhaltigen Verbindung (B'), und ein phosphoreszierendes Pigment (D) enthält,
das phosphoreszierende Pigment (D) auf 100 Gewichtsteile des ungesättigten Polyesterharzes (A) bezogen in einer Menge von ≥ 2 Gewichtsteilen bis ≤ 5 Gewichtsteilen enthalten ist, und
die siliziumdioxidhaltige Verbindung (B') auf eine Gesamtmenge des phosphoreszierenden Splitters (II) bezogen ≥ 20 Gew.-% bis ≤ 30 Gew.-% eines Siliziumdioxidpulvers (b1) enthält, wobei ein durchschnittlicher Teilchendurchmesser des Siliziumdioxidpulvers (b1) größer als 0 µm und kleiner als oder gleich 45 µm ist, wobei
auf die Gesamtmenge des Kunststeins bezogen das lichtdurchlässige Grundmaterial (I) in einer Menge von ≥ 70 Gew.-% bis ≤ 95 Gew.-% enthalten ist und der phosphoreszierende Splitter (II) in einer Menge von ≥ 5 Gew.-% bis ≤ 30 Gew.-% enthalten ist.

2. Kunststein nach Anspruch 1, wobei die siliziumdioxidhaltige Verbindung (B) ein Siliziumdioxidpulver (b1), einen Siliziumdioxidsand (b2) und einen Quarzsplitter (b3) enthält, wobei ein durchschnittlicher Teilchendurchmesser des Siliziumdioxidpulvers (b1) größer als 0 µm und kleiner als oder gleich 45 µm ist, ein durchschnittlicher Teilchendurchmesser des Siliziumdioxidsandes (b2) größer als oder gleich 0,1 mm und kleiner als 1,2 mm ist, und ein durchschnittlicher Teilchendurchmesser des Quarzsplitters (b3) größer als oder gleich 1,2 mm und kleiner als oder gleich 6,0 mm ist.

3. Kunststein nach einem der Ansprüche 1 bis 2, wobei das Siliziumdioxidpulver (b1) auf eine Gesamtmenge des lichtdurchlässigen Grundmaterials (I) bezogen in einer Menge von ≥ 20 Gew.-% bis ≤ 30 Gew.-% enthalten ist,
der Siliziumdioxidsand (b2) auf eine Gesamtmenge des lichtdurchlässigen Grundmaterials (I) bezogen in einer Menge von ≥ 35 Gew.-% bis ≤ 45 Gew.-% enthalten ist, und
der Quarzsplitter (b3) auf eine Gesamtmenge des lichtdurchlässigen Grundmaterials (I) bezogen in einer Menge von ≥ 10 Gew.-% bis ≤ 30 Gew.-% enthalten ist, wobei ein durchschnittlicher Teilchendurchmesser des Siliziumdioxidpulvers (b1) größer als 0 µm und kleiner als oder gleich 45 µm ist, ein durchschnittlicher Teilchendurchmesser des Siliziumdioxidsandes (b2) größer als oder gleich 0,1 mm und kleiner als 1,2 mm ist, und ein durchschnittlicher Teilchendurchmesser des Quarzsplitters (b3) größer als oder gleich 1,2 mm und kleiner als oder gleich 6,0 mm ist.

4. Kunststein nach einem der Ansprüche 1 bis 3, wobei die siliziumdioxidhaltige Verbindung (B') weiter Siliziumdioxidsand (b2) enthält, wobei ein durchschnittlicher Teilchendurchmesser des Siliziumdioxidsandes (b2) größer als oder gleich 0,1 mm und kleiner als 1,2 mm ist.

5. Kunststein nach einem der Ansprüche 1 bis 4, wobei der Siliziumdioxidsand (b2) auf eine Gesamtmenge des phosphoreszierenden Splitters (II) bezogen in einer Menge von ≥ 60 Gew.-% bis ≤ 70 Gew.-% enthalten ist, wobei ein durchschnittlicher Teilchendurchmesser des Siliziumdioxidsandes (b2) größer als oder gleich 0,1 mm und kleiner als 1,2 mm ist.

6. Kunststein nach einem der Ansprüche 1 bis 5, wobei das lichtdurchlässige Grundmaterial (I) und der phosphoreszierende Splitter (II) weiter unabhängig voneinander ein Härtungsmittel, einen Härtungsbeschleuniger, und ein Vernetzungsmittel enthalten.

7. Kunststein nach einem der Ansprüche 1 bis 6, wobei es sich bei dem Vernetzungsmittel um ein Vernetzungsmittel auf Silanbasis handelt.

8. Kunststein nach einem der Ansprüche 1 bis 7, wobei der Kunststein eine diffuse Durchlässigkeit von größer als oder gleich 6,0 % aufweist und nach einer Stunde eine Leuchtdichte von größer als oder gleich 7,0 mcd/m² behält.

9. Kunststein nach einem der Ansprüche 1 bis 8, wobei es sich bei dem phosphoreszierenden Splitter (II) um einen amorphen phosphoreszierenden Splitter handelt.

10. Verfahren zur Herstellung eines Kunststeins, umfassend
Anfertigen einer phosphoreszierenden Harzzusammensetzung (ii), die ≥ 8 Gew.-% bis ≤ 15 Gew.-% eines ungesättigten Polyesterharzes (A), ≥ 85 Gew.-% bis ≤ 92 Gew.-% einer siliziumdioxidhaltigen Verbindung (B'), und ein phosphoreszierendes Pigment (D) enthält, wobei das phosphoreszierende Pigment (D) auf 100 Gewichtsteile des ungesättigten Polyesterharzes (A) bezogen in einer Menge von ≥ 2 Gewichtsteilen bis ≤ 5 Gewichtsteilen enthalten ist, und die siliziumdioxidhaltige Verbindung (B') auf eine Gesamtmenge der phosphoreszierenden Harzzusammensetzung (ii) bezogen ≥ 20 Gew.-% bis ≤ 30 Gew.-% eines Siliziumdioxidpulvers (b1) enthält, wobei ein durchschnittlicher Teilchendurchmesser des Siliziumdioxidpulvers (b1) größer als 0 µm und kleiner als oder gleich 45 µm ist;
Dispergieren der phosphoreszierenden Harzzusammensetzung (ii) unter Verwendung einer Dispergierausrüstung;
Vakuum-Vibrations-Kompressionsformen der zu einer vorbestimmten Form dispergierten phosphoreszierenden Harzzusammensetzung (ii), und Formen derselben zu einer Platte mit einem phosphoreszierenden Effekt;
Brechen der Platte mit dem phosphoreszierenden Effekt, um einen phosphoreszierenden Splitter (II) anzufertigen;
Anfertigen einer lichtdurchlässigen Harzzusammensetzung (i), die ≥ 7 Gew.-% bis ≤ 12 Gew.-% eines ungesättigten Polyesterharzes (A) und ≥ 88 Gew.-% bis ≤ 93 Gew.-% einer siliziumdioxidhaltigen Verbindung (B) enthält, und auf 100 Gewichtsteile des ungesättigten Polyesterharzes (A) bezogen weiter ≥ 0,01 Gewichtsteile bis ≤ 1 Gewichtsteil eines organischen/anorganischen Pigments (C) enthält;
Mischen der lichtdurchlässigen Harzzusammensetzung (i) mit dem phosphoreszierenden Splitter (II), um eine Kunststeinmischung anzufertigen;
Dispergieren der Kunststeinmischung unter Verwendung einer Dispergierausrüstung zu einer vorbestimmten Form; und
Vakuum-Vibrations-Kompressionsformen einer einheitlich verteilten Kunststeinmischung, um einen Kunststein herzustellen, wobei
die lichtdurchlässige Harzzusammensetzung (i) auf die Gesamtmenge des Kunststeins bezogen in einer Menge von ≥ 70 Gew.-% bis ≤ 95 Gew.-% enthalten ist, und der phosphoreszierende Splitter (II) in einer Menge von ≥ 5 Gew.-% bis ≤ 30 Gew.-% enthalten ist.

11. Verfahren nach Anspruch 10, wobei die siliziumdioxidhaltige Verbindung (B) ein Siliziumdioxidpulver (b1) mit einem durchschnittlichen Teilchendurchmesser von größer als 0 µm und kleiner als oder gleich 45 µm, einen Siliziumdioxidsand (b2) mit einem durchschnittlichen Teilchendurchmesser von größer als oder gleich 0,1 mm und kleiner als 1,2 mm, und einen Quarzsplitter (b3) mit einem durchschnittlichen Teilchendurchmesser von größer als oder gleich 1,2 mm und kleiner als oder gleich 6,0 mm enthält, und
das Siliziumdioxidpulver (b1) auf eine Gesamtmenge der lichtdurchlässigen Harzzusammensetzung (i) bezogen in einer Menge von ≥ 20 Gew.-% bis ≤ 30 Gew.-% enthalten ist, der Siliziumdioxidsand (b2) auf eine Gesamtmenge der lichtdurchlässigen Harzzusammensetzung (i) bezogen in einer Menge von ≥ 35 Gew.-% bis ≤ 45 Gew.-% enthalten ist, und der Quarzsplitter (b3) auf eine Gesamtmenge der lichtdurchlässigen Harzzusammensetzung bezogen (i) in einer Menge von ≥ 10 Gew.-% bis ≤ 30 Gew.-% enthalten ist.

12. Verfahren nach Anspruch 10 oder 11, wobei die siliziumdioxidhaltige Verbindung (B') weiter einen Siliziumdioxidsand (b2) mit einem durchschnittlichen Teilchendurchmesser von größer als oder gleich 0,1 mm und kleiner als 1,2 mm enthält, und
der Siliziumdioxidsand (b2) auf eine Gesamtmenge der phosphoreszierenden Harzzusammensetzung (ii) bezogen in einer Menge von ≥ 60 Gew.-% bis ≤ 70 Gew.-% enthalten ist.

## Revendications

1. Pierre artificielle, comprenant
un matériau mère transmettant la lumière (I) et un éclat phosphorescent (II),
dans laquelle le matériau mère transmettant la lumière (I) comporte ≥ 7% en poids à ≤ 12% en poids d'une résine polyester insaturée (A) et ≥ 88% en poids à ≤ 93% en poids d'un composé contenant de la silice (B) par rapport à une quantité totale du matériau mère transmettant la lumière (I),
le matériau mère transmettant la lumière (I) comporte en outre ≥ 0,01 partie en poids à ≤ 1 partie en poids d'un pigment organique/inorganique (C) par rapport à 100 parties en poids de la résine polyester insaturée (A),
l'éclat phosphorescent (II) comporte ≥ 8% en poids à ≤ 15% en poids d'une résine polyester insaturée (A), ≥ 85% en poids à ≤ 92% en poids d'un composé contenant de la silice (B'), et un pigment phosphorescent (D) par rapport à une quantité totale de l'éclat phosphorescent (II),
le pigment phosphorescent (D) est inclus en une quantité ≥ 2 parties en poids à ≤ 5 parties en poids par rapport à 100 parties en poids de la résine polyester insaturée (A), et
le composé contenant de la silice (B') comporte ≥ 20% en poids à ≤ 30% en poids d'une poudre de silice (b1) par rapport à une quantité totale de l'éclat phosphorescent (II), où un diamètre moyen de particule de la poudre de silice (b1) est supérieur à 0 µm et inférieur ou égal à 45 µm, où
le matériau mère transmettant la lumière (I) est inclus en une quantité ≥ 70% en poids à ≤ 95% en poids et l'éclat phosphorescent (II) est inclus en une quantité ≥ 5% en poids à ≤ 30% en poids par rapport à la quantité totale de la pierre artificielle.

2. Pierre artificielle de la revendication 1, dans laquelle le composé contenant de la silice (B) comporte une poudre de silice (b1), un sable de silice (b2) et un éclat de quartz (b3), dans laquelle un diamètre moyen de particule de la poudre de silice (b1) est supérieur à 0 µm et inférieur ou égal à 45 µm, un diamètre moyen de particule du sable de silice (b2) est supérieur ou égal à 0,1 mm et inférieur à 1,2 mm, et un diamètre moyen de particule de l'éclat de quartz (b3) est supérieur ou égal à 1,2 mm et inférieur ou égal à 6,0 mm.

3. Pierre artificielle de l'une des revendications 1 et 2, dans laquelle la poudre de silice (b1) est incluse en une quantité ≥ 20% en poids à ≤ 30% en poids par rapport à une quantité totale du matériau mère transmettant la lumière (I),
le sable de silice (b2) est inclus en une quantité ≥ 35% en poids à ≤ 45% en poids par rapport à une quantité totale du matériau mère transmettant la lumière (I), et
l'éclat de quartz (b3) est inclus en une quantité ≥ 10% en poids à ≤ 30% en poids par rapport à une quantité totale du matériau mère transmettant la lumière (I), où un diamètre moyen de particule de la poudre de silice (b1) est supérieur à 0 µm et inférieur ou égal à 45 µm, un diamètre moyen de particule du sable de silice (b2) est supérieur ou égal à 0,1 mm et inférieur à 1,2 mm, et un diamètre moyen de particule de l'éclat de quartz (b3) est supérieur ou égal à 1,2 mm et inférieur ou égal à 6,0 mm.

4. Pierre artificielle de l'une des revendications 1 à 3, dans laquelle le composé contenant de la silice (B') comporte en outre du sable de silice (b2), où un diamètre moyen de particule du sable de silice (b2) est supérieur ou égal à 0,1 mm et inférieur à 1,2 mm.

5. Pierre artificielle de l'une des revendications 1 à 4, dans laquelle le sable de silice (b2) est inclus en une quantité ≥ 60% en poids à ≤ 70% en poids par rapport à une quantité totale de l'éclat phosphorescent (II), où un diamètre moyen de particule du sable de silice (b2) est supérieur ou égal à 0,1 mm et inférieur à 1,2 mm.

6. Pierre artificielle de l'une des revendications 1 à 5, dans laquelle le matériau mère transmettant la lumière (I) et l'éclat phosphorescent (II) comportent en outre indépendamment un agent de durcissement, un accélérateur de durcissement et un agent de réticulation.

7. Pierre artificielle de l'une des revendications 1 à 6, dans laquelle l'agent de réticulation est un agent de réticulation à base de silane.

8. Pierre artificielle de l'une des revendications 1 à 7, dans laquelle la pierre artificielle a un facteur de transmission diffuse supérieur ou égal à 6,0% et maintient une luminance supérieure ou égale à 7,0 mcd/m² après une heure.

9. Pierre artificielle de l'une des revendications 1 à 8, dans laquelle l'éclat phosphorescent (II) est un éclat phosphorescent amorphe.

10. Procédé de fabrication d'une pierre artificielle, comprenant le fait de préparer une composition de résine phosphorescente (ii) comportant ≥ 8% en poids à ≤ 15% en poids d'une résine polyester insaturée (A), ≥ 85% en poids à ≤ 92% en poids d'un composé contenant de la silice (B'), et un pigment phosphorescent (D), où le pigment phosphorescent (D) est inclus en une quantité ≥ 2 parties en poids à ≤ 5 parties en poids par rapport à 100 parties en poids de la résine polyester insaturée (A), et le composé contenant de la silice (B') comporte ≥ 20% en poids à ≤ 30% en poids d'une poudre de silice (b1) par rapport à une quantité totale de la composition de résine phosphorescente (ii), où un diamètre moyen de particule de la poudre de silice (b1) est supérieur à 0 µm et inférieur ou égal à 45 µm ;
de disperser la composition de résine phosphorescente (ii) en utilisant un équipement de dispersion ;
de mouler sous vide-vibration-compression la composition de résine phosphorescente (ii) dispersée pour avoir une forme prédéterminée et la mouler sous forme d'une feuille ayant un effet phosphorescent ;
d'écraser la feuille ayant l'effet phosphorescent pour préparer un éclat phosphorescent (II) ;
de préparer une composition de résine transmettant la lumière (i) comportant ≥ 7% en poids à ≤ 12% en poids d'une résine polyester insaturée (A) et ≥ 88% en poids à ≤ 93% en poids d'un composé contenant de la silice (B), et comportant en outre ≥ 0,01 partie en poids à ≤ 1 partie en poids d'un pigment organique/inorganique (C) par rapport à 100 parties en poids de la résine polyester insaturée (A) ;
de mélanger la composition de résine transmettant la lumière (i) avec l'éclat phosphorescent (II) pour préparer un mélange de pierres artificielles ;
de disperser le mélange de pierres artificielles en utilisant un équipement de dispersion pour avoir une forme prédéterminée ; et
de mouler sous vide-vibration-compression un mélange de pierres artificielles uniformément réparti pour fabriquer une pierre artificielle, où
la composition de résine transmettant la lumière (i) est incluse en une quantité ≥ 70% en poids à ≤ 95% en poids et l'éclat phosphorescent (II) est inclus en une quantité ≥ 5% en poids à ≤ 30% en poids par rapport à la quantité totale de la pierre artificielle.

11. Procédé de la revendication 10, dans lequel le composé contenant de la silice (B) comporte une poudre de silice (b1) ayant un diamètre moyen de particule supérieur à 0 µm et inférieur ou égal à 45 µm, un sable de silice (b2) ayant un diamètre moyen de particule supérieur ou égal à 0,1 mm et inférieur à 1,2 mm, et un éclat de quartz (b3) ayant un diamètre moyen de particule supérieur ou égal à 1,2 mm et inférieur ou égal à 6,0 mm, et
la poudre de silice (b1) est incluse en une quantité ≥ 20% en poids à ≤ 30% en poids par rapport à une quantité totale de la composition de résine transmettant la lumière (i), le sable de silice (b2) est inclus en une quantité ≥ 35% en poids à ≤ 45% en poids par rapport à une quantité totale de la composition de résine transmettant la lumière (i), et l'éclat de quartz (b3) inclus en une quantité ≥ 10% en poids à ≤ 30% en poids par rapport à une quantité totale de la composition de résine transmettant la lumière (i).

12. Procédé de la revendication 10 ou 11, dans lequel le composé contenant de la silice (B') comporte en outre un sable de silice (b2) ayant un diamètre moyen de particule supérieur ou égal à 0,1 mm et inférieur à 1,2 mm, et
le sable de silice (b2) est inclus en une quantité ≥ 60% en poids à ≤ 70% en poids par rapport à une quantité totale de la composition de résine phosphorescente (ii).
